# EUROPEAN PATENT SPECIFICATION

(11) **EP 2 835 090 B1**
(45) Date of publication and mention of the grant of the patent: **14.09.2016**
(21) Application number: 14169686.4
(22) Date of filing: 23.05.2014
(51) Int. Cl.: A47L 9/24, A47L 11/34

(54) **Hose system with articulated joints for steam and vacuum cleaning**
Schlauchsystem mit Gelenken für Dampf- und Staubsaugen
Système de tuyau au moyen de joints articulés et de nettoyage par aspiration pour la vapeur

(30) Priority: 08.08.2013 IT MI20130288 U
(43) Date of publication of application: 11.02.2015
(73) Proprietor: POLTI S.p.A., 22070 Bulgarograsso (Como) (IT)
(72) Inventor: Polti, Francesca, 22070 Bulgarograsso (CO) (IT); Cappi, Stefano, 22070 Bulgarograsso (CO) (IT); Turati, Riccardo, 22070 Bulgarograsso (CO) (IT)
(74) Representative: Serravalle, Marco

(56) References cited:
- DE-A1- 19 538 342
- FR-A1- 2 698 777
- GB-A- 2 240 468
- US-A- 3 909 197
- US-A- 4 397 057

## Description

### Field of the invention

The present invention relates to a steam and vacuum cleaner, preferably a canister steam and vacuum cleaner, comprising a suction hose for vacuum cleaning and a steam hose for steam conveyance and supply, wherein the steam hose is external to the suction hose and is joined to the same by means of articulated joints. Said articulated joints allow the rotation and sliding of the steam hose in respect to the suction hose.

### Background of the invention

Deep and complete cleaning of domestic surfaces (such as floors, windows, mattresses, walls, etc.) can be advantageously performed by employing a cleaner with multiple functions. In particular, a cleaner capable of drawing dust and/or liquids with high efficiency, while providing steam for removing embedded dirt and grime, is particularly profitable. The use of high temperature steam results in fact in deeper and more hygienic cleaning.

Vacuum and steam cleaners, combining both vacuum function and steam supply, are suitable for performing deep cleaning and sanitization of domestic surfaces.

When using steam and vacuum cleaners, besides a high efficiency of suction and steam generation, good maneuverability and easiness of use are highly desirable, in particular when dealing with vertical and/or irregular surfaces.

At the present, in the aim of providing cleaning devices with the above mentioned requisites, the most advantageous devices are canister steam and vacuum cleaners, wherein the motor, the dust collector and preferably also the steam generator are located within a compact main body.

Canister vacuum cleaners are typically provided with one or more flexible hose(s) to which different nozzles can be connected for different uses.

In particular, conventional devices comprise a dust collector, a steam generator and at least one hose for conveying dirt (from domestic surfaces to a dirt collector) and steam (from a steam generator to domestic surfaces). Typically, at one end, the at least one hose is plugged into the body of the vacuum and steam cleaner through one or more hose connector(s); on the other end, the at least one hose terminates with one or more nozzle(s), optionally with interposition of further hoses or conduits.

Optimal vacuum and steam cleaners combine high efficiency of suction and steam generation with good maneuverability and easiness of use. However, market surveys have highlighted that one of the major drawbacks of conventional vacuum and steam cleaners is the poor maneuverability of the device and in particular of the hose system. It is in fact highly desirable to deal with a vacuum and steam cleaner which is easy to maneuver and whose hose system is not bulky and light to lift, in particular when using it on vertical and/or irregular domestic surfaces (e.g. windows, walls, stairs, corners, etc.). The lack of those requisites in conventional vacuum and steam cleaners leads to a limited use of this kind of devices, only when very deep cleaning is necessary, which consequently results in poor marketability of said cleaners.

Typically, hose systems comprise distinct hoses or conduits respectively for dirt and steam conveyance, which can have separated inlets and/or outlets; however, separated tubes are bulky and inconvenient, therefore, in order to obtain a tidy and handy structure, devices of recent manufacture are preferably provided with steam and vacuum hoses which are joined together. In particular, the most recent hose systems comprise vacuum and steam hoses which are physically distinct and kept together by means of bands, as in US2004111822, or, even more preferably, vacuum and steam hoses which are strictly associated one to another as to form a single hose. Such a structure can be efficiently produced by co-extrusion of the two hoses in a single tube.

For example, CN200977120Y discloses a hose system comprising the suction conduit and the steam conduit joined together to form a single hose. The steam hose is in fact located in a cavity of the suction hose and both are stably wrapped together in an outer sleeve, forming a single hose.

JPH07100087 discloses a vacuum and steam cleaner, wherein the suction and steam hoses are either physically separated, linked to the body of the cleaner with two different connectors, or both stably inserted inside a tube of bigger diameter.

EP2604906 discloses a hose system comprising a suction conduit and a steam conduit, wherein the steam conduit is arranged in a channel extending longitudinally to the suction conduit and stably bond to the latter with lateral edges.

A steam and vacuum cleaner according to the preamble of claim 1 is known from DE-A-19538342.

The hose systems of the prior art, either comprising steam and suction hoses completely separated or mutually joined into a single structure, are unhandy. Compared to separated hoses joined, for example, by means of bands, a single hose system, wherein the suction and steam hoses are permanently associated, being for example produced by co-extrusion into a single structure, appears more tidy and easy to use. However, this kind of system is usually rigid and heavy to be carried about, leading anyway to poor maneuverability of the cleaning device. Furthermore, the production of a single hose system, e.g. by co-extrusion, is generally more expensive.

The present invention is thus aimed to the provision of a steam and vacuum cleaner, preferably a canister steam and vacuum cleaner, comprising a hose system, for vacuum and steam cleaners, which is handier, more maneuverable than conventional systems, and which is economically valuable.

### Summary of the invention

The present invention relates to a steam and vacuum cleaner, preferably a canister steam and vacuum cleaner, comprising a hose system, which hose system comprises a suction hose for vacuum cleaning and a steam hose for steam conveyance and supply, wherein the steam hose is external to the suction hose and it is joined to the same by means of articulated joints.

Both the suction and steam hoses of the invention are preferably flexible hoses.

The articulated joints according to the present invention are composed of two parts: one part is stably bound to the suction hose and the other to the steam hose. The suction hose and the steam hose can move reciprocally along a longitudinal axis (sliding) and rotate. In particular, the two parts of the articulated joints can reciprocally rotate and slide at the junction site. The articulated joints of the invention thus allow the rotation and sliding of one hose in respect to the other.

According to a preferred embodiment of the present invention, the articulated joints of the invention are detachable articulated joints. The two parts of the detachable articulated joints, one stably bound to the suction hose and the other to the steam hose, can be easily connected and detached, consequently the steam hose and the suction hose can be detached.

In a further preferred embodiment, the steam hose comprises detachable connectors at its two ends. At one end, one detachable connector preferably connects the steam hose to the main body of the steam and vacuum cleaner. Optionally, at the other end, the other detachable connector connects the steam hose to a handle. According to a preferred embodiment, by detaching the detachable connectors, the steam hose can be separated from the body of the main vacuum and steam cleaner and/or from a handle.

More preferably, the steam hose comprises one or more detachable articulated joints, which join the steam hose to the suction hose, and two detachable connectors at the two ends of the steam hose, which respectively connect the steam hose to the body of the vacuum and steam cleaner and to a handle. According to said more preferred embodiment, the steam hose can be easily separated from the suction hose by detaching the detachable joints; furthermore, the steam hose can be separated from the steam and vacuum cleaner's body by detaching the detachable connectors. This is very advantageous when the cleaning device is operated in vacuum cleaning mode, without using the steam functionality, as the steam hose can be completely detached from the device by detaching the detachable joints and the detachable connectors, and the suction hose can be used alone, more comfortably and with less effort in carrying it about.

Preferably the articulated joints comprise snap-fasteners.

The hose system according to the present invention is highly comfortable, handy and maneuverable: the two hoses, which are physically separated and joined together by means of the inventive articulated joints, can be handled very comfortably and have very high degree of maneuverability, due to the structure of said articulated joints, whose components can reciprocally rotate and slide. Therefore, the joining of the two hoses does not limit the possible movements of the hose system. Furthermore, the hose system according to the invention is economically valuable, as it can be produced with common materials, commercially available.

### Brief description of figures

Figure 1 is a side view of the hose system, according to a preferred embodiment of the invention. The suction hose and the steam hose comprise detachable articulated joints and are represented in joined configuration.
Figure 2 is a side view of the hose system of figure 1, wherein the hoses are represented in detached configuration with the detachable articulated joints disconnected.
Figure 3 is a perspective view of a detachable articulated joint, according to a preferred embodiment of the invention, in detached configuration.
Figure 4 is a perspective view of the detachable articulated joint of figure 3 in joined configuration.
Figure 5 is a plan view of an articulated joint, according to a preferred embodiment of the invention. The suction hose and the steam hose are visible, aligned in parallel.
Figure 6 is a plan view of the articulated joint of figure 5, showing the possibility of a rotational movement along the vertical axis of the articulated joint, which movement makes it possible to move independently the two hoses, connected together, on different horizontal axes.
Figure 7 is a side view of an articulated joint, according to a preferred embodiment of the invention, connecting the suction hose with the steam hose, in rest position.
Figure 8 is a side view of the articulated joint of figure 7, showing the sliding movement of the two hoses along the longitudinal axis is shown.
Figure 9 is a perspective view, partially exploded, of a detachable articulated joint, according to a preferred embodiment of the invention.
Figure 10 is a perspective view of the rear portion of the main body of a canister steam and vacuum cleaner, according to a preferred embodiment of the invention, wherein the suction hose and the steam hose are associated to the main body through the respective inlets, but are each other detached.

### Detailed description of the invention

The present invention relates to a steam and vacuum cleaner, preferably a canister steam and vacuum cleaner, comprising a hose system, such as a domestic canister vacuum cleaners with steam functionality, wherein the hose system comprises a suction hose for vacuum cleaning, a steam hose for steam conveyance and supply, and one or more articulated joints, wherein the steam hose is external to the suction hose, physically distinct from that, and is joined to the same by means of the one or more articulated joints.

The one or more articulated joints of the hose system of the present invention comprise a first element associated to one hose and a second element associated to the other hose.

The steam hose and the suction hose, joined together by means of the one or more articulated joints, preferably extend each other in parallel, along a longitudinally axis. The articulated joints of the invention provide freedom of reciprocal movement to the two hoses.

Preferably, the steam hose and the vacuum hose are flexible hoses.

The steam and vacuum cleaner of the invention, comprising said hose system preferably comprises a main body which has height, width and length dimensions such that at least one of said dimensions is equal to or less than 300 mm, preferably equal to or less than 280 mm, more preferably equal to or less than 270 mm.

In more details, the articulated joints according to the present invention comprise a first element associated to the steam hose and a second element associated to the suction hose: while the two hoses are joined by means of the articulated joints, one of the hoses can rotate and slide in respect to the other hose. Preferably, the steam hose can rotate and slide in respect to the suction hose.

The articulated joints preferably comprise a fastening element, composed of two parts: one is associated to the first element of the articulated joint and the other to the second element of the articulated joint. The two parts are mated and it is possible to rotate and slide the first part in respect to the second part, and consequently one hose in respect to the other. For example, according to a preferred embodiment, the fastening element comprises a base element and a top element. The base element is associated to the first element of the articulated joint, said first element being in turn bound to the steam hose by means of a rivet, wherein the rivet can slide inside a loop, which is part of the first element. The base element can also rotate around the rivet, through the rotation of the rivet itself inside the loop. The top element is preferably associated to the second element of the detachable joint, which is in turn bound to the suction hose, by means of a rivet, wherein the rivet is stably inserted into a groove, which is part of the second element. Optionally, the rivet of the top element and the rivet of the base element are the same rivet or different rivets that are stably bound. Consequently, the steam hose is stably joined to the suction hose by means of articulated joints and can rotate and slide in respect to the suction hose by means of the rivet(s).

The hoses of the hose system of the invention have thus very high freedom of reciprocal movement. For example, the articulated joints of the invention make it possible to twirl the steam hose to the suction hose and/or *vice versa.*

According to a preferred embodiment of the invention, the articulated joints are detachable articulated joints. The detachable articulated joints comprise a first element associated to the steam hose and a second element associated to the suction hose. Therefore, the suction hose and the steam hose are preferably reversibly joined by means of the one or more detachable articulated joints. The elements of the detachable articulated joints, respectively associated to the suction hose and to the steam hose, can be easily connected and detached.

According to a more preferred embodiment, the detachable articulated joints comprise a fastening-element which is a removable fastening-element. Most preferably, said removable fastening-element comprises a snap-fastener, so that the base element and the top element of the removable fastening element can be temporary associated with hand pressure.

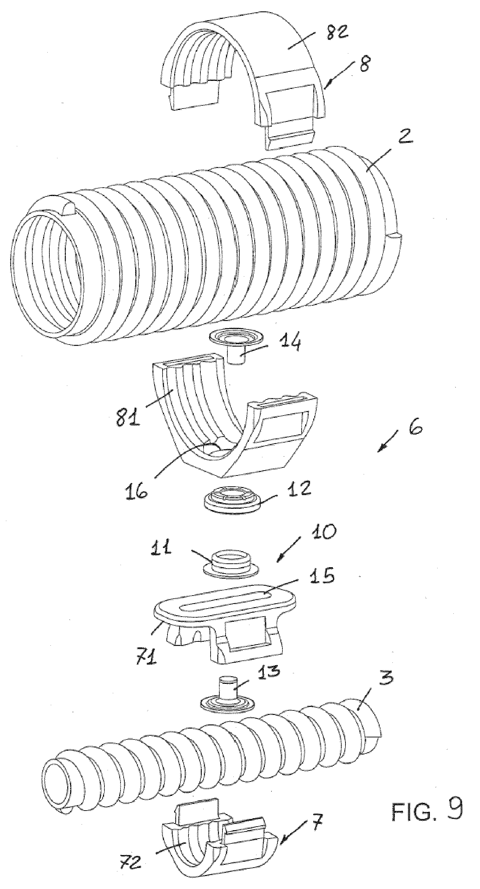

Said base element of the removable fastening element is preferably associated to the first element of the detachable articulated joint, said first element being in turn bound to the steam hose, by means of a rivet. The rivet can slide inside a loop, which is part of the first element. Furthermore, the base element of the removable fastening element can rotate around the rivet, through the rotation of the rivet itself inside the loop. This embodiment is illustrated in figure 9.

Said top element of the removable fastening element is preferably associated to the second element of a detachable articulated joint, which is in turn bound to the suction hose, by means of a rivet, wherein the rivet is stably inserted into a groove, which is part of the second element.

According to said more preferred embodiment, the rivet of the top element and the rivet of the base element are different rivets which are reversibly bound. Consequently, the steam hose is reversibly joined to the suction hose by means of detachable articulated joints, and can rotate and slide in respect to the suction hose by means of the rivets.

Preferably, the suction hose of the present invention has a diameter which is larger than the diameter of the steam hose.

The hose system of the present invention is preferably in fluid communication with a dirt collector and/or steam generator. In particular, according to a preferred embodiment, a first end of the hose system is associated to the main body of the steam and vacuum cleaner, in fluid communication with a dirt collector and a steam generator, and the second end of the hose system is associated to a nozzle. More preferably, the nozzle is connected to the hose system by interposition of one or more further conduits. Most preferably, the second end of the hose system comprises a handle.

Preferably, one end of the suction hose is stably connected to the main body of the cleaning device of the invention by means of a connector (vacuum hose connector); optionally, the other end of the suction hose can be stably associated to a handle, which can be connected, on the other side, to a nozzle, optionally through one or more further tubes.

The freedom of movement of the articulated joints of the invention is such that, even when the articulated joints are detachable articulated joints and thus the two hoses are reversibly joined, it is possible to freely move, for example twirl, the two hoses without accidentally detaching them.

According to a preferred embodiment, the opposing ends of the steam hose are connected to the steam and vacuum cleaner by means of detachable connectors (steam hose connectors), more preferably rapid-fitting detachable connectors, most preferably bayonet connectors.

According to a preferred embodiment, one of the steam hose connectors, preferably detachable connectors, is directly connected to the steam and vacuum cleaner. In another preferred embodiment, one of the steam hose connectors, preferably detachable connectors, is connected also to the vacuum hose connector, which in turn is connected to the steam and vacuum cleaner.

Preferably, the other steam hose connector is connected to a handle, which in turn is connected to the nozzle of the steam and vacuum cleaner, optionally by means of further tubes. When the user holds the handle, he/she can direct the nozzle towards the surfaces to be cleaned. In this embodiment, the hose system comprising articulated joints is very advantageous as it makes it very easy to direct the handle, and consequently the nozzle, without being limited by the rigidity of conventional hoses.

According to a preferred embodiment, the steam hose and the vacuum hose are joined by detachable articulated joints and the steam hose is connected to the steam and vacuum cleaner's body by means of detachable connectors; the steam hose can be easily released from the cleaning device, as it can be easily separated from the suction hose by detaching the detachable joints and from the steam and vacuum cleaner by detaching the detachable connectors. This is very advantageous when the cleaning device is operated in vacuum cleaning mode, without using the steam functionality, as the steam hose can be completely detached from the device by detaching the detachable joints and the detachable connectors, and the suction hose can be used alone, more comfortably and with less effort in carrying it about.

Preferred embodiments of the present invention will be now described in more details with reference to the drawings.

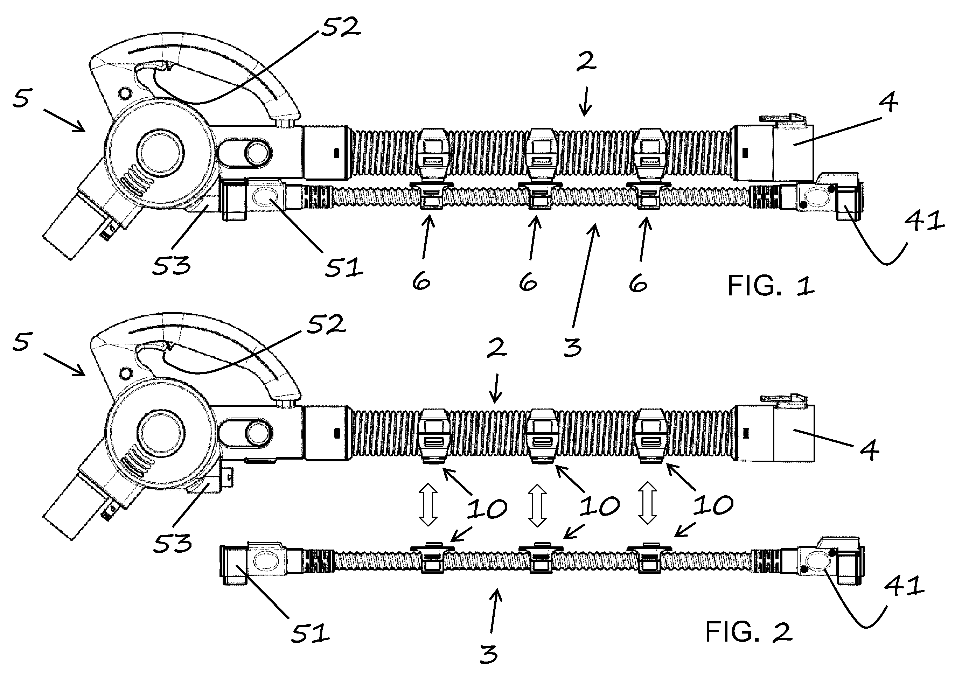

A side view of a hose system according to a preferred embodiment of the present invention is shown in Figure 1. The hose system comprises a suction hose (2) and a steam hose (3), extending each other in parallel. The steam hose (3) is physically distinct from the suction hose (2) and the two hoses are joined by articulated joints (6). According to a preferred embodiment, the articulated joints are detachable articulated joints. The hose system of figure 1 is connected on one end to a connector (vacuum hose connector, 4) and on the other end to a handle (5). According to a preferred embodiment, the suction hose (2) is stably associated to the connector (4) and to the handle (5), while the steam hose (3) is reversibly associated to the main body and and to the handle (5) by means of detachable connectors (steam hose connectors, 41 and 51). More preferably, said detachable connectors are rapid-fitting connectors or equivalents, most preferably bayonet connectors.

Figure 2 shows the hose system of figure 1, according to a more preferred embodiment of the present invention, comprising detachable articulated joints (6) and detachable steam hose connectors (41, 51). The figure shows the steam hose (3) completely separated from the suction hose (2), with detachable articulated joints (6), comprising a first element associated to the steam hose and a second element associated to the suction hose, and the steam hose connectors (41 and 51) detached.

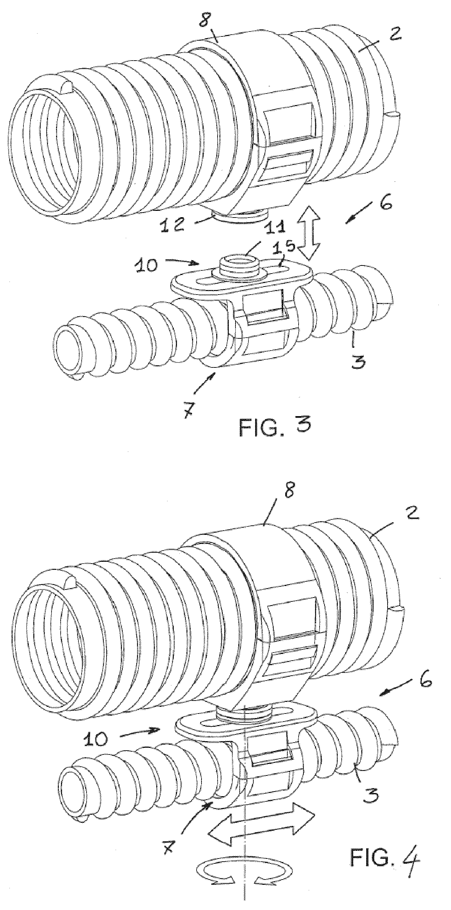

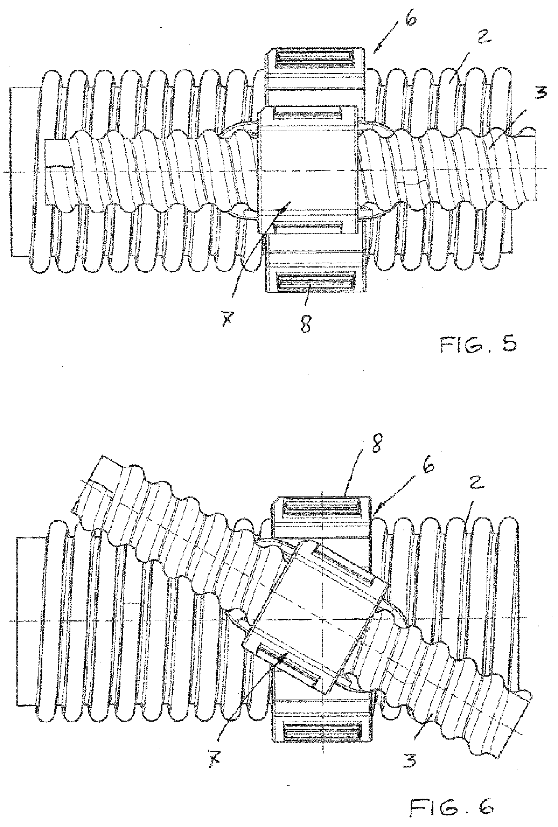

Figures 3 to 9 show in detail the articulated joint of the invention (6), according to a preferred embodiment of the invention wherein the articulated joint are detachable articulated joints. The detachable articulated joint is composed of two elements. The first element (7) is associated to the steam hose (3) and the second element (8) is associated to the suction hose (2). The first element (7) is capable of rotating and sliding in respect to the second element (8) by means of a removable fastening element (10). According to a preferred embodiment, the removable fastening element (10) comprises a base element (11) and a top element (12). The base element (11) is associated to the first element (7) by means of rivet (13); the rivet (13) can slide and rotate inside a loop (15) of the first element (7), so that the base element (11) itself can slide and rotate inside the loop (15). According to a more preferred embodiment, the removable fastening element (10) is a snap-fastener.

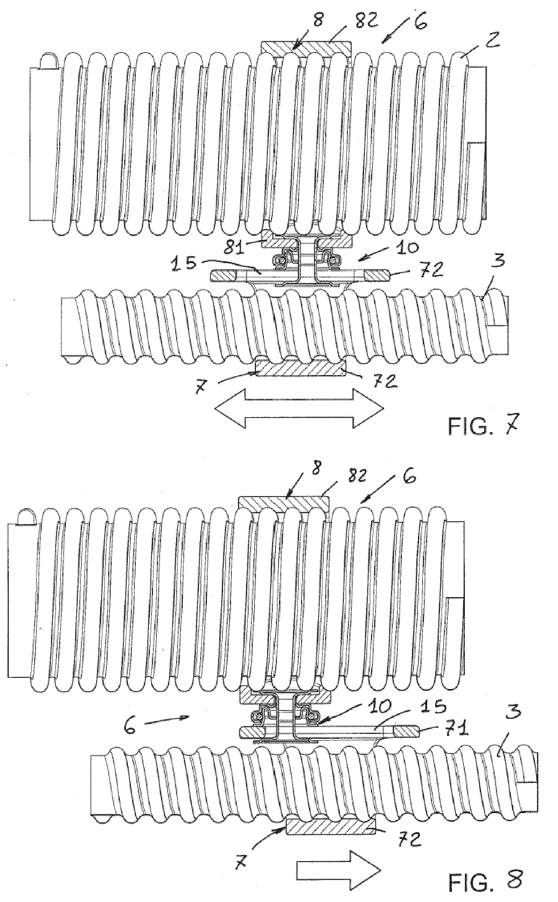

The first element (7) is preferably composed of two portions (71 and 72, in figures 7-9), wherein portion (71) comprises the loop (15). The two portions (71 and 72) can be connected by snap-fit as to stably embrace the steam hose in a selected portion of the same. Also the second element (8) is preferably composed of two portions (81 and 82, in figures 7-9), which can be snap connected in order to embrace the suction hose (2) in a selected portion of the same.

According to a preferred embodiment, the top element (12) of the fastening element (10) is associated to the second element (8) by means of rivet (14) which is inserted into a groove (16) of the portion (81) of the second element (8), as illustrated in figure 9.

The top element (12) and the base element (11) of the one or more fastening elements (10) are joined, optionally reversibly joined. The rivet (13) and the base element (11) associated to the first element (7) can rotate and slide inside the loop (15), making the first element (7), and thus the steam hose (3), rotating and sliding in respect to the suction hose (8).

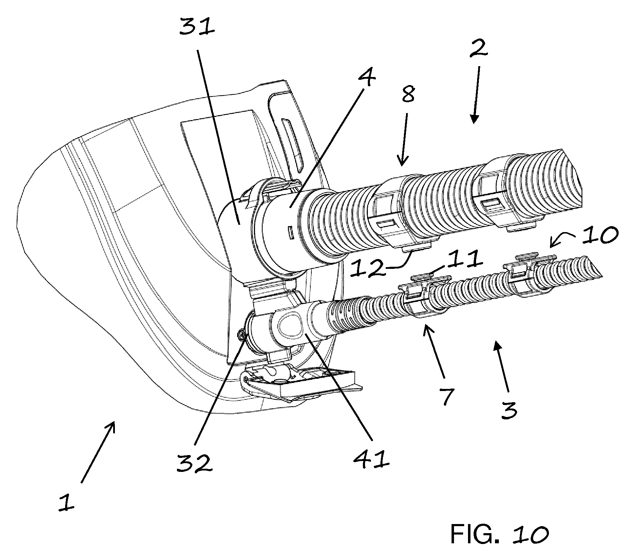

Figure 10 shows the vacuum and steam hoses each plugged into their respective inlets (31 and 32). The steam hose, according to a preferred embodiment, is connected also to the vacuum hose connector (4), in order to be more stably associated to the main body (1) when in use.

The articulated joints of the invention allow the reciprocal movement of the suction and steam hoses, making the hose system highly maneuverable. Furthermore, according to a preferred embodiment of the invention, detachable steam hose connectors (41,51), preferably rapid-fitting connectors, more preferably bayonet connectors, together with detachable articulated joints, make it possible to easily and rapidly detaching the steam hose from the suction hose when using only the vacuum function of the steam and vacuum cleaner.

## Claims

1. A steam and vacuum cleaner, preferably a canister steam and vacuum cleaner, comprising:
i) a main body (1)
ii) a suction hose (2) for vacuum cleaning,
iii) a steam hose (3) for steam conveyance and supply, wherein the steam hose is external to the suction hose, **characterized in that** said steam and vacuum cleaner further comprises:
iv) one or more articulated joints (6),
wherein the suction hose (2) and the steam hose (3) are joined by means of the one or more articulated joints (6) and wherein said articulated joints (6) allow the rotation and sliding of the one hose in respect to the other.

2. The steam and vacuum cleaner of claim 1, wherein the one or more articulated joints (6) comprise a first element (7) associated to the steam hose (3) and a second element (8) associated to the suction hose (2).

3. The steam and vacuum cleaner of claims 1 and 2, wherein the articulated joints (6) are detachable articulated joints.

4. The steam and vacuum cleaner of claims 2-3, wherein the articulated joints (6) comprise a fastening element (10) composed of a base element (11) and a top element (12), wherein the base element (11) is associated to the first element (7) of the articulated joint and the top element (12) is associated to the second element (8) of the articulated joint, and wherein the base element (11) and the top element (12) are mated.

5. The steam and vacuum cleaner of claim 4, wherein the fastening element (10) is a removable fastening element.

6. The steam and vacuum cleaner of claims 4-5, wherein the fastening element (10) is a snap-fastener.

7. The steam and vacuum cleaner of any of claims 4-6, wherein the first element (7) comprises a loop (15), extending parallel to the longitudinal axis of the steam hose (3), and the base element (11) of the fastening element (10) comprises a rivet (13), wherein the base element (11) is associated to the first element (7) by means of said rivet (13), which rivet (13) is inserted inside said loop (15) and can slide and rotate inside said loop (15).

8. The steam and vacuum cleaner of claims 4-7, wherein the top element (12) comprises a rivet (14) and the second element (8) comprises a groove (16), wherein top element (12) is associated to the second element (8) by means of the rivet (14) and wherein the rivet (14) is inserted inside the groove (16).

9. The steam and vacuum cleaner of any of the preceding claims, wherein the suction hose (2) and/or the steam hose (3) are flexible.

10. the canister steam and vacuum cleaner of any of the preceding claims wherein the suction hose (2) diameter is larger than the steam hose (3) diameter.

11. The steam and vacuum cleaner of any of the preceding claims, wherein the first element (7) is composed of two portions (71, 72) and the second element (8) is composed of two portions (81, 82), wherein the two portions of the first element (71, 72) and the two portions of the second element (81, 82) are connected by snap-fit to stably wrap the steam hose (3) and the suction hose (2) respectively, in selected portions of the same.

12. The steam and vacuum cleaner of any of the preceding claims, wherein the steam hose (3) comprises, at each end, a detachable connector (steam hose connectors, 41, 51), preferably a rapid-fitting detachable connector, more preferably a bayonet connector.

13. The steam and vacuum cleaner of any of the preceding claims, wherein one end of the suction hose (2) is associated to the main body (1) of a vacuum and steam cleaner by means of a connector (vacuum hose connector, 4), and the other end of the suction hose (2) comprises a handle (5).

14. The steam and vacuum cleaner of claims 12-13, wherein one steam hose connector (41) is reversibly connected to the main body (1), through a steam hose inlet (32) and the other steam hose connector (51) is reversibly connected to the other end of the suction hose (2).

15. The steam and vacuum cleaner of any of the preceding claims, wherein the main body (1) has width, length and height dimensions such that at least one of said dimensions is equal or less than 300 mm, preferably equal or less than 280 mm, more preferably equal or less than 270 mm.

## Patentansprüche

1. Dampf- und Staubsauger, vorzugsweise ein Kanisterdampf- und Staubsauger, umfassend:
i) einen Hauptkörper (1)
ii) einen Saugschlauch (2) zum Staubsaugen,
iii) einen Dampfschlauch (3) zur Dampfförderung und -zufuhr, wobei sich der Dampfschlauch außerhalb des Saugschlauchs befindet, **dadurch gekennzeichnet, dass** der Dampf- und Staubsauger ferner umfasst:
iv) eine oder mehrere Gelenkverbindungen (6),
wobei der Saugschlauch (2) und der Dampfschlauch (3) mittels der einen oder mehreren Gelenkverbindungen (6) verbunden sind, und wobei die Gelenkverbindungen (6) die Drehung und Verschiebung des einen Schlauchs in Bezug auf den anderen ermöglichen.

2. Dampf- und Staubsauger nach Anspruch 1, wobei die eine oder die mehreren Gelenkverbindungen (6) ein erstes Element (7) umfassen, das mit dem Dampfschlauch (3) verbunden ist und ein zweites Element (8), das mit dem Saugschlauch (2) verbunden ist.

3. Dampf- und Staubsauger nach Anspruch 1 und 2, wobei es sich bei den Gelenkverbindungen (6) um lösbare Gelenkverbindungen handelt.

4. Dampf- und Staubsauger nach Anspruch 2-3, wobei die Gelenkverbindungen (6) ein Befestigungselement (10) umfassen, das aus einem unteren Element (11) und einem oberen Element (12) besteht, wobei das untere Element (11) mit dem ersten Element (7) der Gelenkverbindung und das obere Element (12) mit dem zweiten Element (8) der Gelenkverbindung verbunden ist, und wobei das untere Element (11) und das obere Element (12) zusammengepasst sind.

5. Dampf- und Staubsauger nach Anspruch 4, wobei es sich bei dem Befestigungselement (10) um ein lösbares Befestigungselement handelt.

6. Dampf- und Staubsauger nach Anspruch 4-5, wobei es sich bei dem Befestigungselement (10) um einen Schnappverschluss handelt.

7. Dampf- und Staubsauger nach einem der Ansprüche 4-6, wobei das erste Element (7) eine Schlaufe (15) umfasst, die parallel zu der Längsachse des Dampfschlauchs (3) verläuft, und das untere Element (11) des Befestigungselements (10) eine Niete (13) umfasst, wobei das untere Element (11) mit dem ersten Element (7) mittels der Niete (13) verbunden ist, wobei die Niete (13) in die Schlaufe (15) eingeführt wurde und in der Schlaufe (15) verschoben und verdreht werden kann.

8. Dampf- und Staubsauger nach Anspruch 4-7, wobei das obere Element (12) eine Niete (14) aufweist und das zweite Element (8) eine Nut (16) aufweist, wobei das obere Element (12) mit dem zweiten Element (8) mittels der Niete (14) verbunden ist, und wobei die Niete (14) in die Nut (16) eingeführt wurde.

9. Dampf- und Staubsauger nach einem der vorstehenden Ansprüche, wobei der Saugschlauch (2) und/oder der Dampfschlauch (3) flexibel sind.

10. Kanisterdampf- und Staubsauger nach einem der vorstehenden Ansprüche, wobei der Durchmesser des Saugschlauchs (2) größer ist als der Durchmesser des Dampfschlauchs (3).

11. Dampf- und Staubsauger nach einem der vorstehenden Ansprüche, wobei sich das erste Element (7) aus zwei Teilen (71, 72) zusammensetzt, und sich das zweite Element (8) aus zwei Teilen (81, 82) zusammensetzt, wobei die beiden Teile des ersten Elements (71, 72) und die beiden Teile des zweiten Elements (81, 82) per Schnappverschluss verbunden sind, um den Dampfschlauch (3) und den Saugschlauch (2) in ausgewählten Abschnitten des jeweiligen Schlauchs stabil zu umhüllen.

12. Dampf- und Staubsauger nach einem der vorstehenden Ansprüche, wobei der Dampfschlauch (3) an jedem Ende einen lösbaren Verbinder (Dampfschlauchverbinder, 41, 51) umfasst, vorzugsweise einen lösbaren Verbinder für die Schnellmontage, besonders bevorzugt einen Bajonettverbinder.

13. Dampf- und Staubsauger nach einem der vorstehenden Ansprüche, wobei ein Ende des Saugschlauchs (2) mit dem Hauptkörper (1) eines Dampf- und Staubsaugers mittels eines Verbinders (Saugschlauchverbinder, 4) verbunden ist, und das andere Ende des Saugschlauchs (2) einen Griff (5) umfasst.

14. Dampf- und Staubsauger nach Anspruch 12-13, wobei eine Dampfschlauchverbinder (41) reversibel mit dem Hauptkörper (1) mittels eines Dampfschlauchstutzens (32) verbunden ist, und der andere Dampfschlauchverbinder (51) reversibel mit dem anderen Ende des Dampfschlauchs (2) verbunden ist.

15. Dampf- und Staubsauger nach einem der vorstehenden Ansprüche, wobei der Hauptkörper (1) über Breiten-, Längen- und Höhenabmessungen verfügt, sodass mindestens eine der Abmessungen gleich oder kleiner 300 mm ist, vorzugsweise gleich oder kleiner 280 mm, besonders bevorzugt gleich oder kleiner 270 mm.

## Revendications

1. Dispositif de nettoyage à vapeur et par aspiration, de préférence un dispositif de nettoyage à vapeur et par aspiration à chariot, comprenant :
i) un corps principal (1)
ii) un tuyau d'aspiration (2) pour nettoyage par aspiration,
iii) un tuyau à vapeur (3) pour transport et distribution de vapeur, le tuyau à vapeur étant extérieur au tuyau d'aspiration,
**caractérisé par le fait que** ledit dispositif de nettoyage à vapeur et par aspiration comprend en outre :
iv) un ou plusieurs joints articulés (6),
le tuyau d'aspiration (2) et le tuyau à vapeur (3) étant reliés au moyen du ou des joints articulés (6) et lesdits joints articulés (6) permettant la rotation et le coulissement d'un tuyau par rapport à l'autre.

2. Dispositif de nettoyage à vapeur et par aspiration selon la revendication 1, dans lequel le ou les joints articulés (6) comprennent un premier élément (7) associé au tuyau à vapeur (3) et un second élément (8) associé au tuyau d'aspiration (2).

3. Dispositif de nettoyage à vapeur et par aspiration selon les revendications 1 et 2, dans lequel les joints articulés (6) sont des joints articulés détachables.

4. Dispositif de nettoyage à vapeur et par aspiration selon les revendication 2-3, dans lequel les joints articulés (6) comprennent un élément de fixation (10) composé d'un élément de base (11) et d'un élément supérieur (12), l'élément de base (11) étant associé au premier élément (7) du joint articulé et l'élément supérieur (12) étant associé au second élément (8) du joint articulé, et l'élément de base (11) et l'élément supérieur (12) étant accouplés.

5. Dispositif de nettoyage à vapeur et par aspiration selon la revendication 4, dans lequel l'élément de fixation (10) est un élément de fixation amovible.

6. Dispositif de nettoyage à vapeur et par aspiration selon les revendications 4-5, dans lequel l'élément de fixation (10) est un élément de fixation par encliquetage.

7. Dispositif de nettoyage à vapeur et par aspiration selon les revendications 4-6, dans lequel le premier élément (7) comprend un anneau (15) s'étendant parallèlement à l'axe longitudinal du tuyau à vapeur (3), et l'élément de base (11) de l'élément de fixation (10) comprend un rivet (13), l'élément de base (11) étant associé au premier élément (7) au moyen dudit rivet (13), lequel rivet (13) est introduit à l'intérieur dudit anneau (15) et peut coulisser et tourner à l'intérieur dudit anneau (15).

8. Dispositif de nettoyage à vapeur et par aspiration selon les revendications 4-7, dans lequel l'élément supérieur (12) comprend un rivet (14) et le second élément (8) comprend une rainure (16), l'élément supérieur (12) étant associé au second élément (8) au moyen du rivet (14), et le rivet (14) étant introduit à l'intérieur de la rainure (16).

9. Dispositif de nettoyage à vapeur et par aspiration selon l'une quelconque des revendications précédentes, dans lequel le tuyau d'aspiration (2) et/ou le tuyau à vapeur (3) sont souples.

10. Dispositif de nettoyage à vapeur et par aspiration à chariot selon l'une quelconque des revendications précédentes, dans lequel le diamètre du tuyau d'aspiration (2) est plus grand que le diamètre du tuyau à vapeur (3).

11. Dispositif de nettoyage à vapeur et par aspiration selon l'une quelconque des revendications précédentes, dans lequel le premier élément (7) est composé de deux parties (71, 72) et le second élément (8) est composé de deux parties (81, 82), les deux parties du premier élément (71, 72) et les deux parties du second élément (81, 82) étant reliées par encliquetage pour envelopper de façon stable le tuyau à vapeur (3) et le tuyau d'aspiration (2), respectivement, dans des parties sélectionnées de ceux-ci.

12. Dispositif de nettoyage à vapeur et par aspiration selon l'une quelconque des revendications précédentes, dans lequel le tuyau à vapeur (3) comprend, à chaque extrémité, un raccord détachable (raccords de tuyau à vapeur 41, 51), de préférence un raccord détachable à montage rapide, de façon davantage préférée un raccord à baïonnette.

13. Dispositif de nettoyage à vapeur et par aspiration selon l'une quelconque des revendications précédentes, dans lequel une extrémité du tuyau d'aspiration (2) est associée au corps principal (1) du dispositif de nettoyage à vapeur et par aspiration au moyen d'un raccord (raccord de tuyau d'aspiration 4), et l'autre extrémité du tuyau d'aspiration (2) comprend un manche (5).

14. Dispositif de nettoyage à vapeur et par aspiration selon les revendications 12-13, dans lequel un raccord de tuyau à vapeur (41) est relié de façon réversible au corps principal (1), à travers une entrée de tuyau à vapeur (32), et l'autre raccord de tuyau à vapeur (51) est relié de façon réversible à l'autre extrémité du tuyau d'aspiration (2).

15. Dispositif de nettoyage à vapeur et par aspiration selon l'une quelconque des revendications précédentes, dans lequel le corps principal (1) a des dimensions de largeur, de longueur et de hauteur telles qu'au moins une desdites dimensions est égale ou inférieure à 300 mm, de préférence égale ou inférieure à 280 mm, de façon davantage préférée égale ou inférieure à 270 mm.
